Europäisches Patentamt

European Patent Office

Office européen des brevets

(11) Publication number: **0 240 870**

**A2**

## (12) EUROPEAN PATENT APPLICATION

(21) Application number: **87104568.8**

(22) Date of filing: **27.03.87**

(51) Int. Cl.⁴: **G06F 9/38**

(30) Priority: **11.04.86 US 851012**

(43) Date of publication of application:
**14.10.87 Bulletin 87/42**

(84) Designated Contracting States:
**AT BE CH DE ES FR GB GR IT LI LU NL SE**

�['']⑪ Applicant: **Symbolics, Inc.**
**11 Cambridge Center**
**Cambridge Massachusetts 02142(US)**

(72) Inventor: **Edwards, Bruce E.**
**19 Broad Street**
**Belmont, Massachusetts 02178(US)**
Inventor: **Lebel, Ronald J.**
**1053 Point View Street**
**Los Angeles, California 90035(US)**

(74) Representative: **Pfeifer, Hans-Peter et al**
**Patentanwälte Dr. Moser und Dr. Pfeifer**
**Nowackanlage 15**
**D-7500 Karlsruhe 1(DE)**

(54) **Instruction prefetch unit.**

(57) Symbolic processing method and system. A microprogrammable processor carryies out compiled functions in accordance with a predetermined series of macroinstructions and a main memory stores macroinstructions therein and communicates with the processor over a bus. A unit is disposed in the processor for prefetching a plurality of successive macroinstructions from the main memory at the initiation of a new compiled function including a plurality of instruction buffer registers (111, 112, 113) for storing the macroinstructions and which refills the buffer registers with successive macroinstructions as the buffer registers become empty.

FIG. 3

EP 0 240 870 A2

# INSTRUCTION PREFETCH UNIT

The present invention relates to a symbolic processing system programmable in an artificial intelligence language such as lisp and having a microprogrammable processor and in particular to a macroinstruction prefetch unit which is part of the memory control of the processor.

A symbolic processing system of the type to which the present invention relates, is disclosed in European Patent Application 83 112 554.7 (Publ.No. 113 460). In that system, a macroinstruction fetch unit was provided which obtained macroinstructions from main memory and stored these macroinstructions in a cache memory in the processor for later use by the processor. This system necessitated that the macroinstructions be stored in an internal random access memory (RAM) in the processor. The implementation of the instruction fetch unit necessitated a complex array of logic for transferring the macroinstructions to and from the cache and required that the macroinstruction cache be disposed in the internal (RAM). memory of the processor.

The main object of the present invention is to provide an instruction prefetch unit with an instruction buffer for prefetching macroinstructions from main memory in a way in which the instruction buffer can be disposed in a gate array rather than in internal RAM and to provide a simple design for routing the macroinstructions into and out of the buffer.

The instruction prefetch unit has the ability of storing macroinstructions in a buffer so that the system does not have to wait for the end of the microinstructions to fetch the next macroinstructions. Thus saving time in the processor.

The symbolic processing system, disclosed in the aforementioned pending application, is programmable in the lisp language and is a 36 bit machine. The 36 bit words are used to refer to objects which are dealt with in the lisp programming language.

The system includes a processor, a main memory, an I/O, and other units which are interconnected by a bus referred to as the L-bus.

One of the fundamental design features of the processor is that it is microprogrammed with the microcode stored in a control memory in the processor. Microinstructions are fetched from the microcode control memory and executed at a rate of one microcode instruction per clock cycle. Part of the microinstruction word is used to determine the address of the next word to be fetched from the microcode control memory and thus controls the sequence of events in the processor.

Macrocode is the instruction set or assembly language of the processor. The macrocode is stored in virtual memory in the main memory of the system. The macrocode is not executed directly, but rather each macro instruction calls for one or more microinstructions which perform the actual hardware functions.

The macroinstructions are latched into instruction buffer registers in the instruction prefetch unit. A series of one or more microinstructions performs the functions specified by the macroinstruction and when this series of microinstructions is complete, the next macroinstruction in the instruction buffer will be output and the process is repeated. The buffer of the instruction prefetch unit in accordance with the present invention preferably has six buffer registers and the unit keeps the instruction buffer registers filled. The unit waits to fill the instruction buffer registers in pairs so that a pair is free when the two macroinstructions within it have been executed.

In accordance with the present invention, when the processor jumps to execute a new compiled function, the microcode will refill the instruction buffer registers with a new set of six macroinstructions.

These and other objects and features of the present invention will be disclosed in more detail hereinafter with reference to the attached drawings, wherein:

Figure 1 is a block diagram of a symbolic processing system according to the present invention;

Figure 2 is a block diagram showing elements of the processor of Fig. 1;

Figure 3 is a logic diagram showing elements of the memory control shown in Fig. 2; and

Figure 4 is a more detailed schematic of the elements of the memory control shown in Fig. 3.

The system in accordance with the present invention includes processor 10, memory 20, I/O 30 which are interconnected via a 36 bit bus which is labeled L-bus 50. Main memory 20 stores the macroinstructions for carrying out various compiled functions while. processor 20 stores the microinstructions needed for carrying out various macroinstruction. I/O 30 can be a disk or tape controller or any other standard input output device.

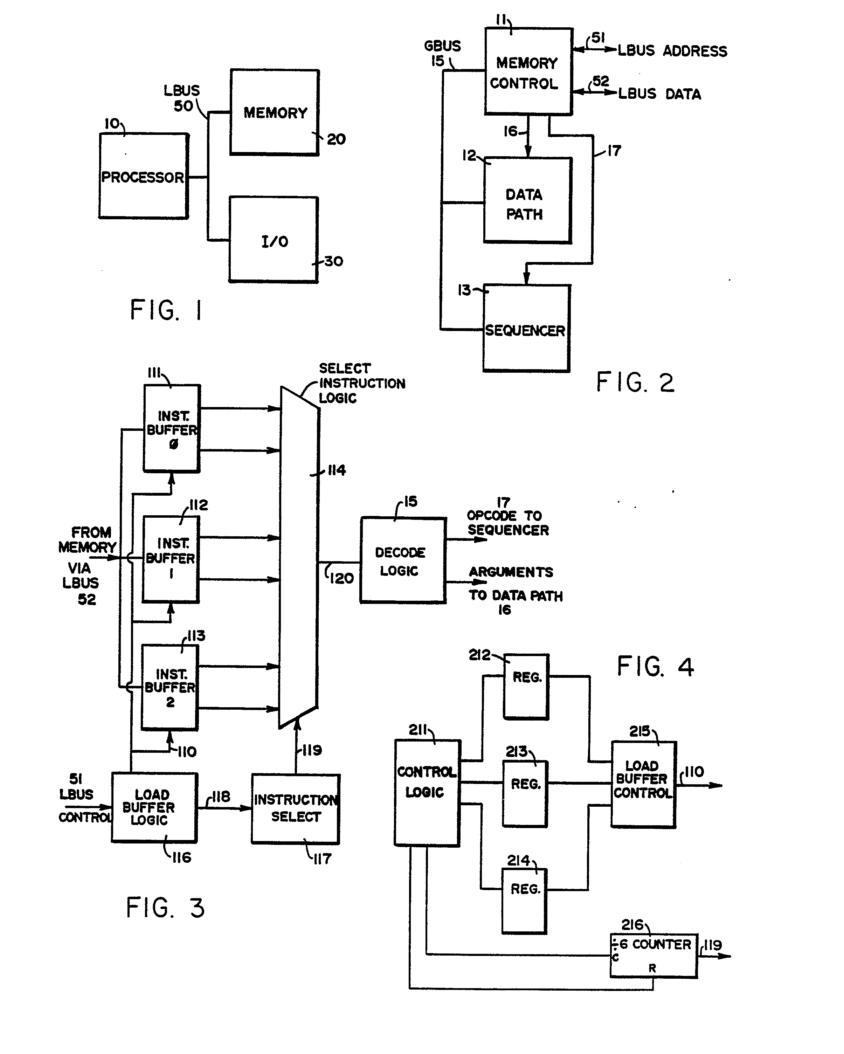

The processor 10, comprises a memory control 11, data path 12 and sequencer 13 which are all interconnected along a bus labeled G-bus 15, as shown in Figure 2. Memory control 11 also directly accesses the data path 12 and sequencer 13 via lines 16 and 17 as will be explained hereinafter.

The memory control accesses the L-bus 50 along lines 51 and 52 on which the L-bus address and L-bus data, respectively, are applied.

The memory control helps the processor communicate and organize the memory 20 where the objects and macrocode are stored. The data path 12 is used to carry out object processing and this is where the microcode can take one or two objects and create another object from them. The sequencing unit 13 is where the microcode controls which microinstruction will execute next.

The memory control 11 sends a direct signal to the sequencing unit 13 along line 17 to initiate a microroutine for a particular macroinstruction and also directly feeds data path 12 over line 16 in order to set up the data path for the processing of microinstructions.

The portion of the memory control 11 which relates to the present invention is the instruction prefetch unit shown in Fig. 3 for storing six macroinstructions from memory 20 for use by the processor for carrying out a compiled function which is defined by a series of macroinstructions.

The instruction prefetch unit includes a buffer having three pairs of buffer registers 111, 112, 113, each of which stores two macrocode instructions. The macrocode instructions are 17 bits long and the L-bus transfers 36 bit data words, thus each data word may comprise a pair of macrocode instructions.

The six macroinstructions are input into buffer registers 111-113 under the control of load buffer logic 116 via lines 110 which also controls the output of macroinstructions with instruction select 117, via line 118. Instructions select 117 effects the outputting of the macroinstructions from the buffer registers 111-113 by means of the select instruction logic 114 so that the proper macroinstruction of the six stored therein is applied to line 120 and fed into decode logic 15 to generate an opcode to the sequencer and an argument to the data path along lines 17 and 16.

Fig. 4 shows the basic elements of the load buffer logic 116 and the instruction select 117 used in the instruction prefetch unit of Fig. 3. The load buffer logic includes three status indicator registers 212-214, control logic 211 and load buffer control 215. Control logic 211 follows the execution of macroinstructions and the initiation of a new compiled function. The instruction select comprises a divide by six counter 216 which is clocked and reset by control logic 211 which follows macroinstruction execution. Status indicator registers 212, 213 and 214 are controlled by control logic 211 to indicate whether the instruction buffers 111-113 respectively are loaded or not.

During operation, when a new compiled function is to be carried out, counter 216 is reset by control logic 211 and control logic 211 also resets registers 212-214. Load buffer control 215, in response to the resetting of registers 212-214, produces a signal indicating that two macroinstructions can be loaded in register 111.

When a pair of macroinstructions are loaded into registers 111, control logic 211 sets register 212. Load buffer control 215 receives this change in status and line 110 enables the loading of registers 112. When registers 112 are loaded and status register 213 is set by control logic 211, load buffer control 215 enables the loading of registers 113. After status register 214 is set registers 111-113 are filled and load buffer control 215 will not permit any further fetching of macroinstructions.

When the processor starts carrying out the macroinstructions the execution of each macroinstruction stored in the instruction prefetch unit is controlled by control logic 211 which clocks counter 216 for one count. The count of counter 216 is outputted on line 119 to select instruction logic 114 which outputs each successive stored macroinstruction onto line 120, depending on the count.

After the first two macroinstructions are executed from instruction buffer 111, control logic 211 will reset register 212 in order to indicate that buffer register 111 is empty. The instruction prefetch unit will then be able to load the next pair of macroinstruction words into the buffer register 111. The same will be carried out for instruction buffer registers 112 and 113 as they empty.

It will be appreciated that the instant specification and claims are set forth by way of illustration and not limitation, and that various modifications and changes may be made without departing from the spirit and scope of the present invention.

## Claims

1. Symbolic processing system having a microprogrammable processor (10) for carrying out compiled functions each compiled function being defined by a series of macroinstructions and a main memory (20) storing macroinstructions therein and communicating with the processor over a bus, characterised by

means disposed in the processor for prefetching a plurality of successive macroinstructions from the main memory (20) at the inition of a new compiled function

the means for prefetching including

a plurality of instructions buffer registers (111,112,113) for storing the macroinstructions and means for refilling the buffer registers with successive macroinstructions as the buffer registers become empty.

2. Symbolic processing system according to claim 1,
characterised by
a load buffer logic (116) including
status indicator registers (212,213,214) cooperating with the instruction buffer registers (111,112,113) for indicating the status of the instructions buffer registers and
a load buffer control (215) for controlling the loading of macroinstructions according to the indication of the status indicator registers.

3. Symbolic processing system according to claim 1,
characterised by
an instructions select (117) for selecting the macroinstructions from the instruction buffer registers (111,112,113) in the order of their storing, the instruction select (117) including a divide by N counter (216) N being the number of macroinstructions to be stored in the instruction buffer registers (111,112,113).

4. Method of symbolic processing wherein a microprogrammable processor carries out compiled functions which are defined by a series of macroinstructions by obtaining macroinstructions from a main memory over a bus
characterised in that
the step of obtaining macroinstructions comprises prefetching a plurality of successive macroinstructions from the memory at the inition of a new compiled function and storing said plurality of macroinstructions in a plurality of instruction buffer registers in the processor and thereafter refilling the instruction buffer registers with successive macroinstructions as the instruction buffer registers are emptied.

FIG. 1

FIG. 2

FIG. 3

FIG. 4